# EUROPEAN PATENT APPLICATION

(11) **EP 4 644 042 A1**
(43) Date of publication of application: **05.11.2025**
(21) Application number: 22970130.5
(22) Date of filing: 28.12.2022
(51) Int. Cl.: B23Q 17/09, B23B 29/24

(54) **DATA COLLECTION DEVICE, DATA COLLECTION METHOD, DATA COLLECTION PROGRAM, CUTTING TOOL, AND DATA COLLECTION SYSTEM**

(71) Applicant: SUMITOMO ELECTRIC INDUSTRIES, LTD., Osaka-shi, Osaka 541-0041 (JP)
(72) Inventor: TOYOSHIMA, Akihiro, Osaka-shi, Osaka 541-0041 (JP); KURIYAMA, Yusuke, Osaka-shi, Osaka 541-0041 (JP)
(74) Representative: Boult Wade Tennant LLP
(86) International application number: PCT/JP2022/048439
(87) International publication number: WO 2024/142342

(57) **Abstract**

This data collection device includes: an information acquisition unit that acquires information from a machine tool, which has a plurality of attachment units to which a plurality of cutting tools are attachable and switches the plurality of cutting tools to use for machining a workpiece, the information identifying an attachment unit to which a cutting tool being used by the machine tool is attached; and an information storage unit that stores information about an attachment unit to which a first cutting tool is attached. The first cutting tool has a sensor that detects the state of the first cutting tool, and an output unit that outputs data output by the sensor. The data collection device further includes a data reception unit that executes or stops receiving of data from the first cutting tool, in accordance with whether or not the information acquired by the information acquisition unit matches the information about the attachment unit to which the first cutting tool is attached.

## Description

### TECHNICAL FIELD

The present disclosure relates to a data collection device, a data collection method, a data collection program, a cutting tool, and a data collection system.

### BACKGROUND ART

It has been proposed that in a machine tool using a cutting tool, the cutting tool be provided with a sensor for monitoring a state of the cutting tool (PTL 1). Sensor data is wirelessly sent from the sensor to a data collection device. The data collection device accumulates this sensor data and displays it on a screen as needed. Based on a thus-obtained measurement result of a state of machining of a work, a user sets machining conditions and monitors an abnormality in the cutting tool.

When used, the cutting tool is often attached to a device called "turret". Therefore, as a power source for the sensor of the cutting tool, a wireless transmission module of the cutting tool, or other parts of the cutting tool, a battery provided in a body of the cutting tool is used.

### CITATION LIST

### PATENT LITERATURE

PTL 1: International Publication No. 2021/251072

### SUMMARY OF INVENTION

According to an aspect of the present disclosure, there is provided a data collection device including an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool and an information storage unit storing the information related to the fitting fitted with a first cutting tool. The first cutting tool includes a sensor configured to detect a state of the first cutting tool and an output unit configured to output data outputted by the sensor. The data collection device further includes a data receiving unit configured to execute or stop reception of the data from the first cutting tool according to whether the information obtained by the information acquisition unit matches the information related to the fitting fitted with the first cutting tool. According to this configuration, when the machine tool changes from using one cutting tool to using another, the data collection device can collect data outputted by the sensor of the new cutting tool, provided communication with the new cutting tool is possible. Further, if communication with the new cutting tool is impossible, the data collection can be stopped. When the machine tool is not using the first cutting tool in machining, it becomes unnecessary to examine a sensor output from the first cutting tool or transmit the sensor output to an external device. This results in making it possible to provide a data collection device that solves problems that arise from a high sampling rate.

This present disclosure can be implemented not only as a data collection device including such a characteristic processing unit but also as a data collection method including such a characteristic process as a step or as a program for causing a computer to execute such a step. Further, this present disclosure can also be implemented as a semiconductor integrated circuit that implements any part or the whole of the data collection device or implemented as a data collection system including the data collection device.

### BRIEF DESCRIPTION OF DRAWINGS

FIG. 1 is a schematic diagram of a functional configuration of a machine tool system 10 according to the present disclosure.
FIG. 2 is a schematic diagram of a configuration of a machine tool system according to a first embodiment of the present disclosure.
FIG. 3 is a perspective view showing a configuration of a cutting tool that is used in the machine tool system according to the first embodiment of the present disclosure.
FIG. 4 is a block diagram showing a configuration of a data transmitter that is used in the cutting tool shown in FIG. 3.
FIG. 5 is a block diagram schematically showing a configuration of a control unit shown in FIG. 2.
FIG. 6 is a schematic diagram of a turret that is used in a machining unit shown in FIG. 5.
FIG. 7 is a block diagram schematically showing a configuration of a processor of the control unit shown in FIG. 5.
FIG. 8 is a block diagram showing a configuration of a data collection device shown in FIG. 2.
FIG. 9 is a schematic diagram of a configuration of storage areas in a RAM (random-access memory) shown in FIG. 8.
FIG. 10 is a flow chart showing a control structure of a program that is executed by the data collection device shown in FIG. 2 and that constitutes an operating application for collecting data from cutting tools.
FIG. 11 is a diagram showing a screen layout in the application shown in FIG. 10 through which to input a correspondence relationship between identification names of cutting tools and turret numbers corresponding thereto.
FIG. 12 is a flow chart showing a control structure of a program that is launched in the data collection device by the program shown in FIG. 10 and that implements a data collection process.
FIG. 13 is a flow chart showing a control structure of a program that is executed by the cutting tool shown in FIG. 3.
FIG. 14 is a flow chart showing a control structure of a program that is executed by the processor shown in FIG. 5 in the first embodiment of the present disclosure.
FIG. 15 is a flow chart showing a control structure of a program that is executed by the processor shown in FIG. 5 in a second embodiment of the present disclosure.
FIG. 16 is a flow chart showing a control structure of a program that is executed by a data collection device in the second embodiment of the present disclosure.
FIG. 17 is a flow chart showing a control structure of a program that is executed by a cutting tool in a third embodiment of the present disclosure.
FIG. 18 is a block diagram showing a control structure of a program that is executed by a data collection device in the third embodiment of the present disclosure.
FIG. 19 is a block diagram showing a configuration of a modification of the control unit shown in FIG. 5.

### DETAILED DESCRIPTION

### [Problems to be Solved by Present Disclosure]

A cutting tool encompasses a milling tool that rotates at a high speed, a turning tool that performs a process on a work that rotates at a high speed, or other tools. Therefore, it is necessary to sample data at a high sampling rate and transmit the data to a data collection device in order to appropriately monitor a state of the cutting tool. This results in increased consumption of electric power from a battery and increased frequency of maintenance of the cutting tool. Further, a high sampling rate leads to an increased amount of data, making it necessary for the data collection device to have a large-capacity storage medium.

It is an object of the present disclosure to provide a data collection device, a data collection method, a data collection program, a cutting tool, and a data collection system that solve problems that arise from a high sampling rate.

### [Advantageous Effects of Present Disclosure]

As noted above, the present disclosure makes it possible to provide a data collection device, a data collection method, a data collection program, a cutting tool, and a data collection system that solve problems that arise from a high sampling rate.

### [Description of Embodiments of Present Disclosure]

In the following description and drawings, identical components are given identical reference signs. Accordingly, a detailed description of those components is not repeated. It should be noted that at least parts of the embodiments to be described below may be combined as appropriate.

(1) According to a first aspect of the present disclosure, there is provided a data collection device including an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool and an information storage unit storing the information related to the fitting fitted with a first cutting tool. The first cutting tool includes a sensor configured to detect a state of the first cutting tool and an output unit configured to output data outputted by the sensor. The data collection device further includes a data receiving unit configured to execute or stop reception of the data from the first cutting tool according to whether the information obtained by the information acquisition unit matches the information related to the fitting fitted with the first cutting tool. According to this configuration, when the machine tool changes from using one cutting tool to using another, the data collection device can collect data outputted by the sensor of the new cutting tool, provided communication with the new cutting tool is possible. Further, if communication with the new cutting tool is impossible, the data collection can be stopped. When the machine tool is not using the first cutting tool in machining, it becomes unnecessary to examine a sensor output from the first cutting tool or transmit the sensor output to an external device. This results in making it possible to provide a data collection device that solves problems that arise from a high sampling rate.
(2) In (1) above, the data receiving unit may be configured to execute the reception of the data from the first cutting tool via a wireless communication device. This configuration makes it unnecessary to make a wired connection between the first cutting tool and the data receiving unit, making it easy to receive sensor data from the first cutting tool while the first cutting tool is being used by the machine tool.
(3) In (2) above, the data receiving unit may be configured to maintain a connection to the cutting tool by the wireless communication even during stoppage of the reception of the data from the first cutting tool. According to this configuration, the connection between the first cutting tool and the data receiving unit is maintained even when the data receiving unit is not receiving data from the first cutting tool. This makes it possible to start communication immediately after data communication between the first cutting tool and the data receiving unit has become necessary next time, making it possible to reduce the possibility of failure to receive the beginning of data.
(4) In (3) above, the data collection device may further include a stop control unit configured to, in response to a change of the information obtained by the information acquisition unit from a state of matching the information related to the fitting fitted with the first cutting tool to a state of not matching the information, transmit to the first cutting tool a stop instruction to cause the sensor to stop detecting the state and a start control unit configured to, in response to a change of the information obtained by the information acquisition unit from the state of not matching the information related to the fitting fitted with the first cutting tool to the state of matching the information, transmit to the first cutting tool a start instruction to cause the sensor to start detecting the state. This configuration makes it unnecessary to measure a sensor output from the first cutting tool when transmission of data from the first cutting tool to the data collection device is unnecessary. This results in making it possible to reduce power consumption in the first cutting tool, making it possible to lengthen maintenance intervals.
(5) In any one of (1) to (4) above, the information acquisition unit may be configured to repeatedly acquire the information at time intervals shorter than a period of time required for a start of a replacement of the cutting tool to an end of the replacement in the machine tool. The information acquisition unit can find, at time intervals shorter than a period of time required for a start of a replacement of the cutting tool to an end of the replacement in the machine tool, whether the first cutting tool has come to be used or whether a change of cutting tools from the first cutting tool hitherto used to another cutting tool has occurred. Prior to the use of the cutting tool in machining in next work, the data collection device can surely find a changing of the cutting tools.
(6) In any one of (1) to (4) above, the machine tool may have a function of, when the machine tool changes from using one cutting tool to using another, outputting the information identifying the cutting tool, and the information acquisition unit may be configured to acquire the information from the machine tool when the machine tool changes from using the one cutting tool to using the other. When the machine tool changes from using one cutting tool to using another, the information acquisition can find information related to the changed cutting tool. Therefore, when one cutting tool is replaced by another, the data collection device can surely find the replacement and can surely stop and start data collection. This makes it unnecessary to inquire the machine tool about an in-use cutting tool in order to find a cutting tool being used by the machine tool, making it possible to simplify processes.
(7) In any one of (1) to (4) above, the sensor of the first cutting tool may include at least an acceleration sensor, the first cutting tool may have a function of detecting switching to another cutting tool in the machine tool based on an output from the acceleration sensor and outputting a switching detection signal to the data collection device via the output unit, and in response to reception of the switching detection signal from the first cutting tool, the information acquisition unit may be configured to acquire, from the machine tool, information identifying the fitting fitted with the cutting tool to be used by the machine tool.

When the machine tool replaces one cutting tool with another, a mechanical portion having the fittings of the machine tool is mechanically moved. Therefore, when the cutting tools are provided with acceleration sensors, a timing when the machine tool may change from using one cutting tool to using another can be identified by detecting the mechanical movement with the acceleration sensors. Transmitting the timing from the first cutting tool to the data collection device allows the data collection device to, only during a period of time in which the cutting tool may be replaced, request the machine tool for information identifying the cutting tool being used. This makes it unnecessary to always request such information, making it possible to simplify processes that are executed in the data collection device and the machine tool.
(8) According to a second aspect of the present disclosure, there is provided a data collection method of causing a computer to perform operations including acquiring, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool and storing, in a storage device, the information related to the fitting fitted with a first cutting tool. The first cutting tool includes a sensor configured to detect a state of the first cutting tool and an output unit configured to output data outputted by the sensor. The method further includes executing or stopping reception of the data from the first cutting tool according to whether the information obtained in the acquiring matches the information related to the fitting fitted with the first cutting tool. According to this configuration, when the machine tool changes from using one cutting tool to using another, the data collection device can collect data outputted by the sensor of the new cutting tool, provided communication with the new cutting tool is possible. Further, if communication with the new cutting tool is impossible, the data collection can be stopped. When the machine tool is not using the first cutting tool in machining, it becomes unnecessary to examine a sensor output from the first cutting tool or transmit the sensor output to an external device. This results in making it possible to solve problems that arise from a high sampling rate.
(9) According to a third aspect of the present disclosure, there is provided a data collection program being a computer program for causing a computer to function as an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool and an information storage unit storing the information related to the fitting fitted with a first cutting tool. The first cutting tool includes a sensor configured to detect a state of the first cutting tool and an output unit configured to output data outputted by the sensor. The computer program further causes the computer to function as a data receiving unit configured to execute or stop reception of the data from the first cutting tool according to whether the information obtained by the information acquisition unit matches the information related to the fitting fitted with the first cutting tool. According to this configuration, when the machine tool changes from using one cutting tool to using another, the data collection device can collect data outputted by the sensor of the new cutting tool, provided communication with the new cutting tool is possible. Further, if communication with the new cutting tool is impossible, the data collection can be stopped. When the machine tool is not using the first cutting tool in machining, it becomes unnecessary to examine a sensor output from the first cutting tool or transmit the sensor output to an external device. This results in making it possible to solve problems that arise from a high sampling rate.
(10) According to a fourth aspect of the present disclosure, there is provided a cutting tool including a wireless communication unit, a holder holding a cutting insert, a sensor provided in the holder, a data transmission unit provided in the holder and configured to measure an output from the sensor and wirelessly transmit the output from the sensor to an external device via the wireless communication unit, and a sensor control unit configured to, in response to reception of a first instruction or a second instruction different from the first instruction from the external device via the wireless communication unit, cause the data transmission unit to start or stop measuring the output from the sensor. According to this configuration, transmitting the first instruction to the cutting tool when the cutting tool is used by the machine tool allows a data collection device to collect sensor data from the cutting tool. When the cutting tool is replaced by another cutting tool and goes out of use, transmitting the second instruction to the cutting tool makes it possible to suspend a process of measuring a sensor output from the cutting tool and transmitting the sensor output to an external device. This results in making it possible to reduce power consumption by suspending the cutting tool in collecting data from the cutting tool, making it possible to solve problems that arise from a high sampling rate.
(11) According to a fifth aspect of the present disclosure, there is provided a data collection system including a cutting tool including a sensor and having a function of transmitting data detected by the sensor to an external device and a data collection device configured to collect the data from the cutting tool. The data collection device includes an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool, an information storage unit storing the information related to the fitting fitted with the cutting tool, a data receiving unit configured to execute or stop reception of the data from the cutting tool according to whether the information obtained by the information acquisition unit matches the information related to the fitting fitted with the cutting tool, a stop control unit configured to, in response to a change of the information obtained by the information acquisition unit from a state of matching the information related to the fitting fitted with the cutting tool to a state of not matching the information, transmit to the cutting tool a first instruction to cause the sensor to stop detecting the state, and a start control unit configured to, in response to a change of the information obtained by the information acquisition unit from the state of not matching the information related to the fitting fitted with the cutting tool to the state of matching the information, transmit to the first cutting tool a second instruction to cause the sensor to start detecting the state. The cutting tool includes a wireless communication unit, a holder having the sensor attached thereto and holding a cutting insert, a data transmission unit provided in the holder and configured to measure an output from the sensor and wirelessly transmit the output from the sensor to the data collection device via the wireless communication unit, and a sensor control unit configured to, in response to reception of the first instruction or the second instruction from the data collection device via the wireless communication unit, cause the data transmission unit to start or stop measuring the output from the sensor. According to this configuration, when the machine tool changes from using one cutting tool to using another, the data collection device can collect data outputted by the sensor of the new cutting tool, provided communication with the new cutting tool is possible. Further, if communication with the new cutting tool is impossible, the data collection from the cutting tool can be stopped. When the machine tool is not using the first cutting tool in machining, it is possible to suspend a process of examining a sensor output from the first cutting tool and transmitting the sensor output to an external device. This results in making it possible to provide a data collection device that solves problems that arise from a high sampling rate.

### [Details of Embodiments of Present Disclosure]

Specific examples of a data collection device, a data collection method, a data collection program, a cutting tool, and a data collection system according to embodiments of the present disclosure are described below with reference to the drawings. It should be noted that the present disclosure is not limited to these examples but is indicated by the claims, and it is intended that meanings of equivalents to the claims and all changes falling within the scope are encompassed.

### 1. Basic Configuration

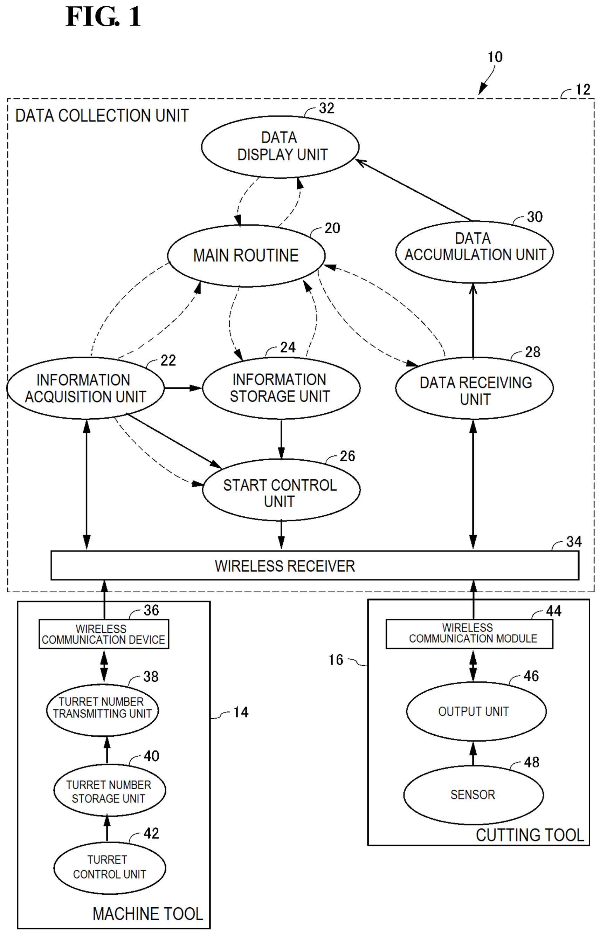

FIG. 1 shows a basic configuration of a machine tool system 10 according to the present disclosure. Referring to FIG. 1, the machine tool system 10 includes a cutting tool 16, a machine tool 14, and a data collection unit 12. The machine tool 14 uses a plurality of changeable cutting tools such as the cutting tool 16. The data collection unit 12 collects sensor data from a sensor provided in the cutting tool 16 and displays the sensor data. It should be noted that the cutting tool 16 to be used in the following description may be a milling tool or may be a turning tool.

The cutting tool 16 has a sensor 48, an output unit 46, and a wireless communication module 44. The sensor 48 detects a state of the cutting tool 16. The output unit 46 receives and outputs data outputted by the sensor 48. The wireless communication module 44 wirelessly transmits to the data collection unit 12 the sensor data outputted by the output unit 46.

The machine tool 14 includes a wireless communication device 36, a turret (not illustrated), a turret control unit 42, a turret number storage unit 40, and a wireless communication device 36. The turret has fittings to which a plurality of cutting tools are fitted. By rotating the turret in accordance with a schedule of machining, the turret control unit 42 selects a cutting tool to be used in machining. In the turret number storage unit 40, the turret control unit 42 stores a turret number indicating a fitting fitted with a cutting tool that the machine tool 14 is using in machining. The wireless communication device 36 is intended to transmit the turret number stored in the turret number storage unit 40 to the data collection unit 12 via the wireless communication device 36 in response to a request from a partner or in response to a change in the turret number. It should be noted that the "change in the turret number" here means that the machining carried out by the hitherto used cutting tool has ended and the turret number stored in the turret number storage unit 40 has been replaced by the turret number of a fitting fitted with a cutting tool to be used next. Moreover, a period of "use" of a certain cutting tool by the machine tool herein means a period from a change from a turret number to the turret number of a fitting fitted with the cutting tool to the end of machining carried out by the cutting tool and the replacement of the content of storage in the turret number storage unit 40 by the turret number of a fitting fitted with a cutting tool to be used next. It should be noted that although information identifying a fitting fitted with a cutting tool that the machine tool 14 is using in machining is herein called "turret number", the turret number may be replaced by another piece of information (such as an angle of rotation of the turret (which falls within the range of 0 degrees to 360 degrees) or an identifier indicating a fitting), provided the piece of information can identify a fitting fitted with a cutting tool that is used.

The data collection unit 12 includes a wireless receiver 34 that receives wireless transmissions from the machine tool 14 and the cutting tool 16. In the present embodiment, the data collection unit 12 receives all information from the machine tool 14 and the cutting tool 16 via the wireless receiver 34.

The data collection unit 12 further includes an information acquisition unit 22 and an information storage unit 24. The information acquisition unit 22 acquires information identifying a fitting fitted with the cutting tool 16 that the machine tool 14 is using from the machine tool 14 used in machining. The information storage unit 24 stores, in a storage device (not illustrated), information related to a fitting fitted with a first cutting tool. The machine tool system 10 further includes a start control unit 26 and a data receiving unit 28. Based on whether the information obtained by the information acquisition unit 22 matches the information stored in the information storage unit 24 and related to the fitting fitted with the cutting tool 16, the start control unit 26 transmits to the cutting tool 16 via the wireless receiver 34 an instruction to start transmitting the sensor data or stop transmitting the sensor data. The data receiving unit 28 receives via the wireless receiver 34 the sensor data that the cutting tool 16 transmits in response to the data transmission instruction from the start control unit 26.

The data collection unit 12 further includes a data accumulation unit 30, a data display unit 32, and a main control unit 20. The data accumulation unit 30 accumulates the sensor data received by the data receiving unit 28. The data display unit 32 executes predetermined data processing on the data accumulated by the data accumulation unit 30 and uses a monitor (not illustrated) to perform a data display indicating the state of the cutting tool 16. The main control unit 20 exercises control of each component of the data collection unit 12.

### 2. First Embodiment

### A. Configuration

### A1. Overall Configuration

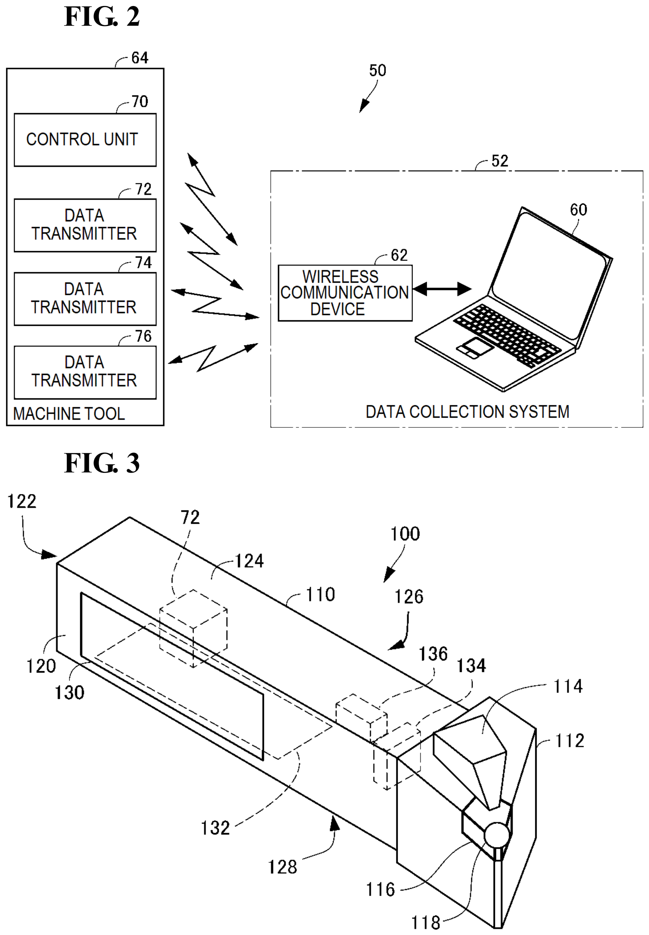

Referring to FIG. 2, a specific machine tool system 50 according to a first embodiment includes a machine tool 64, data transmitters 72, 74, and 76 of cutting tools inside the machine tool 64, and a data collection system 52 that wirelessly collects and accumulates sensor information from these data transmitters or other devices and performs a time-series display of data in real time.

The machine tool 64 includes a control unit 70 that exercises overall control pertaining to a machining process. Details of the machine tool 64, the data transmitters, and the data collection system 52 will be described later.

### A2. Cutting Tool 100

FIG. 3 shows a configuration of a cutting tool 100 having the data transmitter 72. Referring to FIG. 3, the cutting tool 100 includes a head section 112 to which a cutting insert 116 is fixed and a holder section 110 fixed to an end of the head section 112 opposite to an end of the head section 112 to which the cutting insert 116 is fixed. The cutting tool 100 is a turning tool. The cutting insert 116 has a cutting blade 118 at a front edge thereof and is detachably fixed to the head section 112 by a fixing member 114. In FIG. 3, the holder section 110 has a top face 124, a bottom face 128, a front face 120, a back face 126, and an end face 122.

In the present embodiment, the cutting tool 100 further includes sensor modules such as a thermal sensor 134 provided inside the holder section 110, an acceleration sensor 136 provided inside the holder section 110, and strain sensors 130 and 132 provided outside the holder section 110. The thermal sensor 134 is fixed to an inner part of the holder section 110 located close to the head section 112. The strain sensor 130 is fixed to the front face 120 of the holder section 110. The strain sensor 132 is fixed to the bottom face 128.

The cutting tool 100 further includes the data transmitter 72 shown in FIG. 2. The data transmitter 72 is provided inside the holder section 110 so as to receive sensor outputs from each sensor module. The data transmitter 72 is intended to perform a process of sampling and digitalizing those output sensors and transmitting them to the data collection system 52.

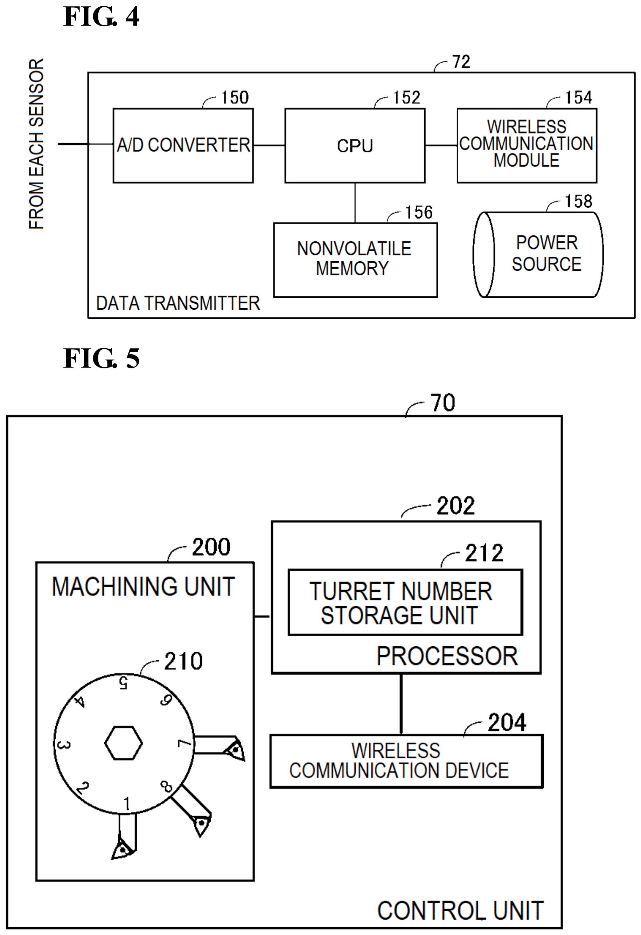

Referring to FIG. 4, the data transmitter 72 includes an A/D conversion unit 150 that samples and digitalizes a sensor output from each of the sensor modules described above, a CPU (central processing unit) 152 connected so as to receive digital data outputted by the A/D conversion unit 150, a nonvolatile memory 156 connected to the CPU 152, and a wireless communication module 154 for wirelessly transmitting, to the data collection system 52, sensor data processed by the nonvolatile memory 156 and packetized for transmission. The control unit 70 is further provided with a power source 158 that supplies electric power to the A/D conversion unit 150, the CPU 152, the wireless communication module 154, and the nonvolatile memory 156. In the present embodiment, the power source 158 is a battery. The power source 158 may be a rechargeable battery or may be a dry battery.

### A3. Machine Tool 64

Referring to FIG. 5, the control unit 70 of the machine tool 64 includes a machining unit 200, a processor 202, and a wireless communication device 204. The machining unit 200 includes a turret 210 having a plurality of fittings to each of which a cutting tool can be fitted. The machining unit 200 is intended to perform machining on a work using a cutting tool selected by rotating the turret 210 according to a schedule of machining. The processor 202 is intended to control the machining unit 200 in accordance with a predetermined program. The wireless communication device 204 is connected to the processor 202. The processor 202 uses the wireless communication device 204 in communicating with an external device.

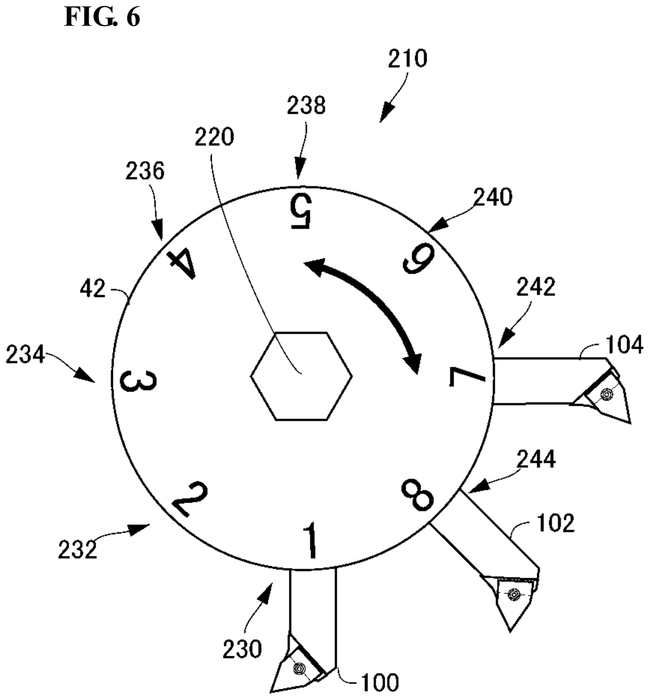

Referring to FIG. 6, the turret 210 has the shape of a flat cylinder and can rotate in increments of 45 degrees around a central shaft 220. The turret 210 has provided in a clockwise fashion on a side surface thereof eight fittings, namely fittings 230, 232, 234, 236, 238, 240, 242, and 244, to each of which a cutting tool such as the cutting tool 100 shown in FIG. 3 can be fitted. In the example shown in FIG. 6, the fitting 230 is fitted with the cutting tool 100, the fitting 244 with a cutting tool 102, and the fitting 242 with a cutting tool 104. The other fittings 232, 234, 236, 238, and 240 are not fitted with cutting tools. In the present embodiment, a maximum of eight cutting tools can be fitted to the turret. However, the present disclosure is not limited to such an embodiment. The present disclosure can also be applied to a case where the maximum number of cutting tools that can be fitted is 7 or smaller or 9 or larger. Furthermore, a machine tool that has a plurality of turrets each capable of switching among a plurality of cutting tools and that conducts work with switching among the turrets and the cutting tools is conceivable. In such a case, not only turret numbers but also a combination of identifiers of the turrets per se and the turret numbers may be used.

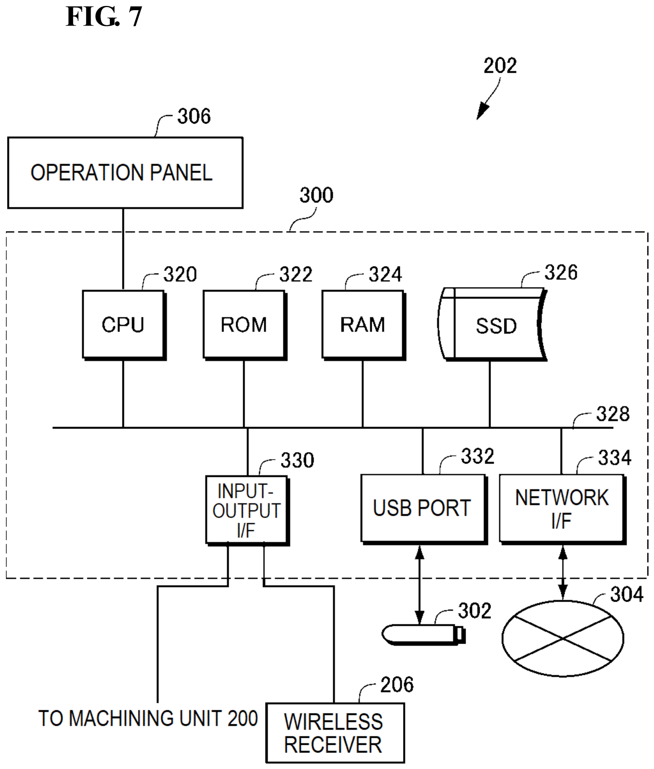

FIG. 7 shows an example of a hardware configuration of a computer 300 that implements the processor 202.

Referring to FIG. 7, the computer 300 includes a CPU 320, a bus 328, a ROM (read-only memory) 322, a RAM 324, and an SSD (solid-state drive) 326. The bus 328 is connected to the CPU 320. The ROM 322 is connected to the bus 328 and has stored thereon a boot-up program of the computer 300 or other programs. The RAM 324 is connected to the bus 328 and has stored thereon instructions constituting a program during execution, a system program, a system state, working data, or other pieces of information. The SSD 326 is a nonvolatile memory connected to bus 328. The SSD 326 is intended to have stored thereon a program that is executed by the CPU 320 and data or other pieces information that are used by the program that is executed by the CPU 320. The computer 300 further includes an input-output I/F (interface) 330, a network I/F 334, and a USB port 332. The input-output I/F 330, the network I/F 334, and the USB port 332 are all connected to the bus 328. A peripheral device is connected to the input-output I/F 330. The network I/F 334 provides a connection to a network 304 that enables communication with another terminal. A USB (universal serial bus) memory 302 can be attached to and detached from the USB port 332. The USB port 332 provides communication between the USB memory 302 and each internal component of the computer 300.

In the present embodiment, the program that is executed by the processor 202 or other programs are stored in the SSD 326, the RAM 324, or the USB memory 302, all of which are shown, for example, in FIG. 7, or stored in a storage medium or other media of an external device (not illustrated) connected to the bus 328 via the network I/F 334 and the network 304. Typically, these data and parameters or other pieces of information are, for example, written from the external device to the SSD 326 and, when executed by the computer 300, loaded into the RAM 324. It should be noted that the processor 202 controls the machining unit 200 to perform a machining process with a cutting tool selected by the turret 210 for use. At this point in time, as shown in FIG. 5, the turret number of a fitting fitted with a cutting tool that the machining unit 200 is using in machining is stored in a storage area in the processor 202 called "turret number storage unit 212". The turret number storage unit 212 is provided, for example, inside the RAM 324 of FIG. 7.

The program that is executed by the processor 202 is stored, for example, in the USB memory 302 and, in a state where the USB memory 302 is fitted to the USB port 332, is transferred to and stored in the SSD 326. Alternatively, this program may be transmitted to the computer 300 through the network I/F 334 and the network 304 and stored in the SSD 326.

The program is loaded into the RAM 324 when executed. Of course, a keyboard, a monitor, a mouse, or other devices (not illustrated) may be connected to the input-output I/F 330, and a source program may be inputted using these devices. An object program with which this source program has been complied needs only be stored in the SSD 326. In the case of a script language, a script inputted using the keyboard or other devices may be stored in the SSD 326. In the case of a program that operates on a virtual machine, a program that functions as the virtual machine needs to be installed in advance in the computer 300.

The CPU 320 reads out the program from the RAM 324 in accordance with an address indicated by a register (not illustrated) therein called "program counter", interprets instructions, reads out data needed for execution of the instructions from the RAM 324, the SSD 326, or other devices in accordance with addresses designated by the instructions, and executes processing designated by the instructions. The CPU 320 stores data of execution results in addresses designated by the program, such as the RAM 324, the SSD 326, and the register in the CPU 320. At this point in time, the value of the program counter is updated by the program. The computer program may be directly loaded into the RAM 324 either from the USB memory 302 or via the network 304 and the network I/F 334.

A configuration of programs that implement the function of each component of the control unit 70 according to each embodiment of the present disclosure in cooperation with the computer 300 will be described later. Those programs include a plurality of instructions described and arrayed so as to cause the computer 300 to implement each function. Some of the basic functions needed to execute these instructions are provided by an operating system (OS) that operates on the computer 300, a third party's program, or modules of various types of tool kit that are installed in the computer 300. Accordingly, these programs do not necessarily need to include all functions needed to implement the system and the method of the present embodiment. The instructions of these programs need only include instructions to execute actions as each of the devices described above and constituent elements thereof by statically linking appropriate functions or the functions of a "programming tool kit" in a way controlled so as to give desired outcomes or by dynamically forming links with those functions during execution of the programs. A method of operating the computer 300 therefor is well known. Accordingly, a description of the method is not repeatedly here.

The foregoing description of operation of the computer also applies to another computer in the present disclosure. Accordingly, general operation of a computer that is hereinafter used in each embodiment of the present disclosure is not repeatedly described.

### A4. Data Collection System 52

Referring again to FIG. 2, the data collection system 52 includes a wireless communication device 62 and a data collection device 60. The wireless communication device 62 performs wireless communication with a wireless communication module 154 (see FIG. 4) provided in a cutting tool fitted to the turret 210 inside the machine tool 64. The wireless communication device 62 is intended primarily to receive sensor data from each data transmitter. The data collection device 60 accumulates sensor data received by the wireless communication device 62 and performs a process of displaying a time series of sensor data in association with each turning tool.

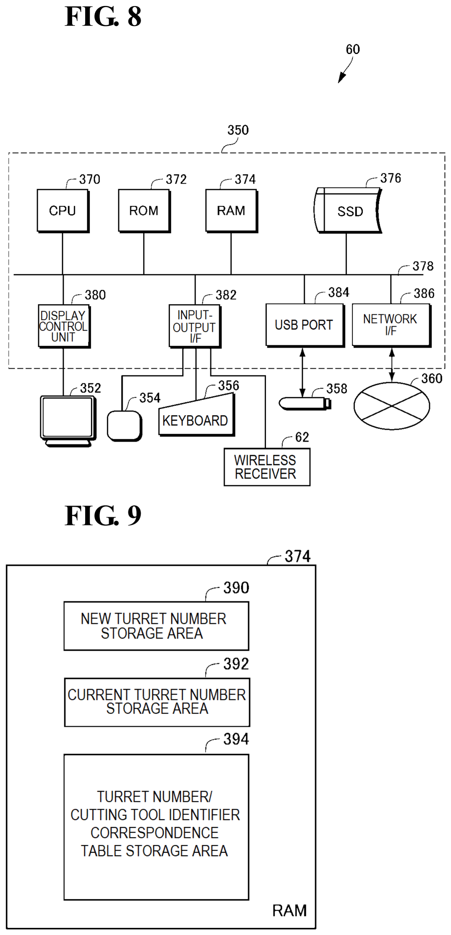

FIG. 8 is a block diagram showing an example of a hardware configuration of a computer 350 that implements the data collection device 60. Referring to FIG. 8, the computer 350 includes a keyboard 356, a touch pad 354, and a monitor 352 all of which are provided in a housing of the computer 350 and serve as interfaces with a user. Of course, this is an example of a configuration that is utilized when it is necessary to communicate with the user, and any common hardware or software (such as a mouse, voice input, and a pointing device in general) that can be utilized to communicate with the user can be utilized.

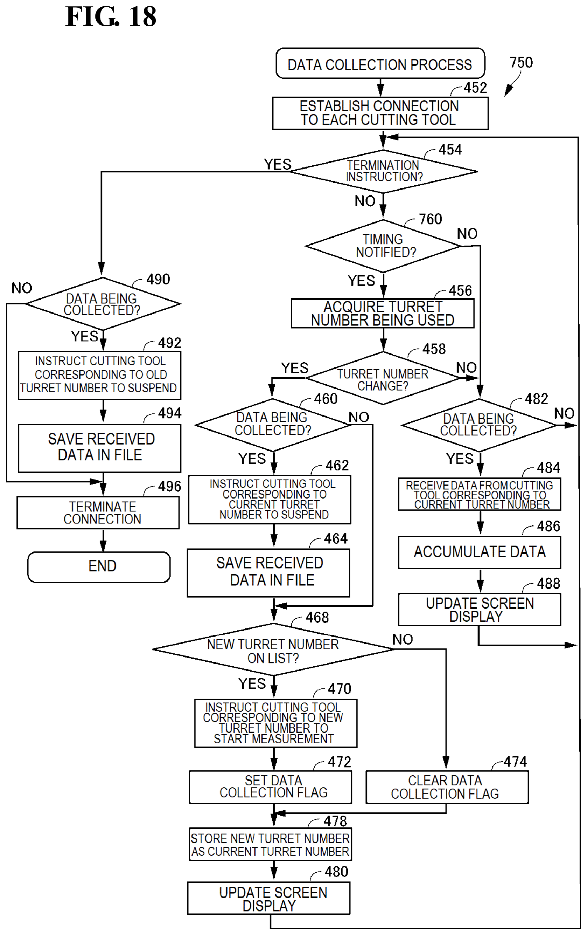

Referring to FIG. 18, the computer 350 includes a CPU 370, a bus 378, a ROM 372, a RAM 374, and an SSD 376. The bus 378 is connected to the CPU 370. The ROM 372 is connected to the bus 378 and has stored thereon a boot-up program of the computer 350 or other programs. The RAM 374 is connected to the bus 378 and has stored thereon instructions constituting a program during execution, a system program, a system state, working data, or other pieces of information. The SSD 376 is a nonvolatile memory connected to the bus 378. The SSD 376 is intended to have stored thereon a program that is executed by the CPU 370 and data or other pieces of information that are used by the program that is executed by the CPU 370. The computer 350 further includes an input-output I/F 382, a network I/F 386, and a USB port 384. The input-output I/F 382, the network I/F 386, and the USB port 384 are all connected to the bus 378. A peripheral device is connected to the input-output I/F 382. The network I/F 386 provides a connection to a network 360 that enables communication with another terminal. A USB memory 358 can be attached to and detached from the USB port 384. The USB port 384 provides communication between the USB memory 358 and each internal component of the computer 350.

FIG. 9 shows storage areas in the RAM 374 that hold main variables that the CPU 370 uses in the present embodiment. That is, the RAM 374 includes a current turret number storage area 392 storing the number of a fitting fitted with a cutting tool being used by the machining unit 200 and a new turret number storage area 390 storing the turret number of a fitting fitted with a cutting tool to be newly used when turret switching occurs. The RAM 374 further includes a correspondence table storage area 394 storing a turret number/cutting tool identifier correspondence table indicating a correspondence relationship between turret numbers and identifiers of cutting tools fitted to fittings corresponding to those turret numbers.

### A5. Program Configuration (Data Collection Device 60)

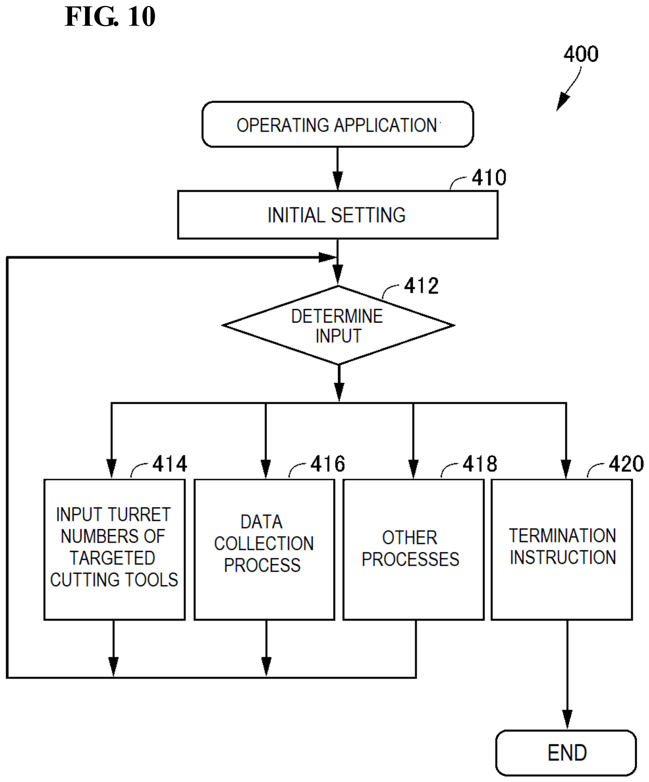

FIG. 10 shows, in a flow chart form, a control structure of an operating application that the user launches in order for the data collection device 60 shown in FIG. 2 to perform data collection from the machine tool 64. This application operates basically under the user's instructions in an interactive format.

Referring to FIG. 10, this program includes a step 410 and a step 412. The step 410 is a step of, immediately after the program has been launched, configuring initial settings such as the securement of a storage area that the program uses, the initialization of values of the program, the confirmation and initialization of a connection to a peripheral device, and the display of an initial screen image. The step 412 is a step of determining what an instruction inputted by the user or an input from an external device is like and causing the flow of control to branch.

In the present embodiment, the initial screen image shows a first button for selecting the inputting of targeted cutting tools and the turret numbers of fittings fitted with those cutting tools, a second button for performing data collection from the machine tool 64, a third button for executing other processes, and a fourth button for terminating the execution of the program.

This program includes a step 414 and a step 416. The step 414 is executed at a press of the first button in the step 412. The step 414 is a step of returning the control to the step 412 after a process of inputting the turret numbers of the target cutting tools has been performed. The step 416 is executed at a press of the second button in the step 412. The step 416 is a step of launching a process of starting data collection from the machine tool 64 and, after the end of the process, returning the control to the step 412. This program further includes a step 418 and a step 420. The step 418 is executed at a press of the third button in the step 412. The step 418 is a step of returning the control to the step 412 after other predetermined processes have been executed. The step 420 is a step of terminating the execution of this program in response to a press of the fourth button in the step 414.

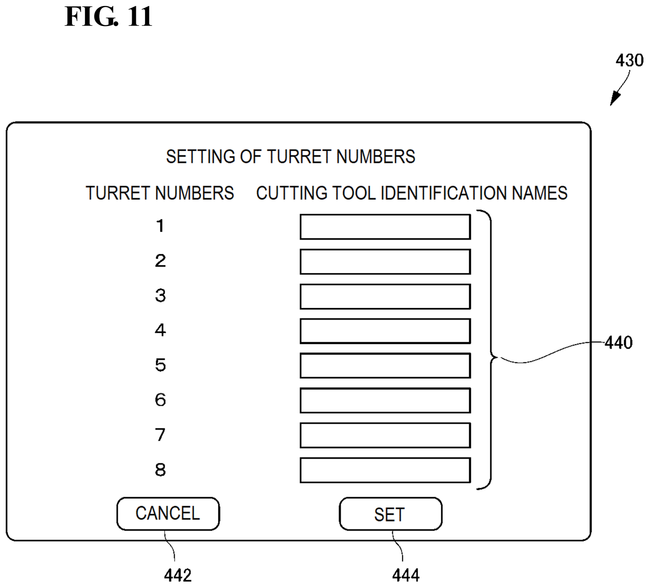

FIG. 11 shows an example of a screen image 430 that is displayed on the monitor 352 in the step 414 of FIG. 10. Referring to FIG. 11, the screen image 430 shows eight turret numbers 1 to 8 and eight field columns 440 into which to enter identification names of cutting tools fitted to fittings of the turret numbers. When a cutting tool having the same function as the cutting tool 100 is fitted to a particular fitting, the identification name of the cutting tool is fitted into a field column 440 corresponding to the turret number of the fitting. The "identification name of a cutting tool" as used herein may be, for example, a Mac address assigned to a wireless communication module of each cutting tool, an identifier assigned to a cutting tool at the point of production of the cutting tool, or a name assigned ex post to a cutting tool by a user of the cutting tool for ease of differentiation from another cutting tool. The identification name of a cutting tool entered into a field column 440 is stored in the correspondence table storage area 394 shown in FIG. 9 in association with a turret number corresponding to the field. In the case of no entry into a field column 440, there is no cutting tool identifier corresponding to a turret number corresponding to the field column.

The screen image 430 further shows a cancel button 442 and a set button 444. The cancel button 442 is used in canceling the setting of a correspondence relationship between cutting tool identification names and turret numbers. The set button 444 is used in making an instruction to cause a correspondence relationship between cutting tool identification names and turret numbers inputted on the screen image 430 to be stored in the correspondence table storage area 394 of FIG. 9.

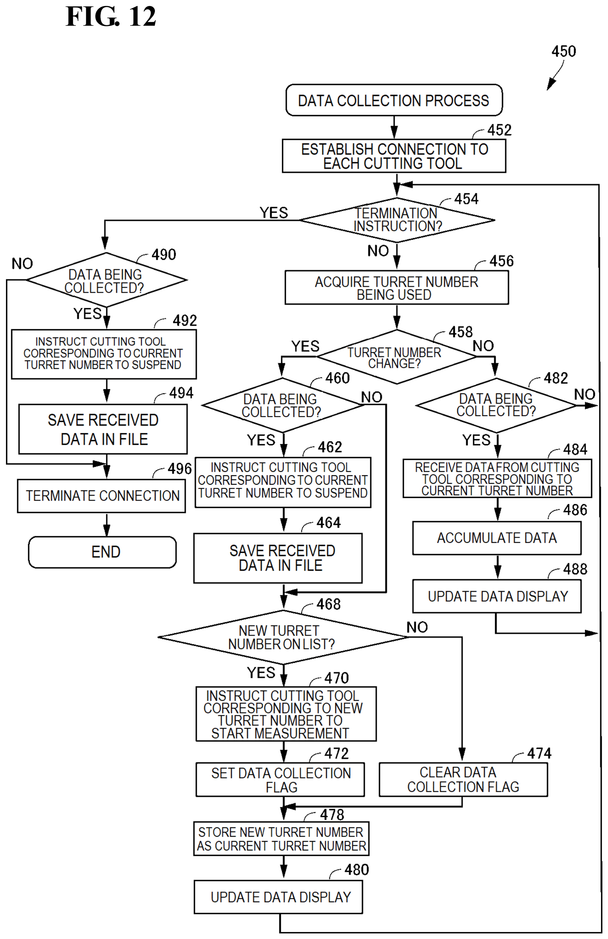

FIG. 12 shows, in a flow chart form, a control structure of a program that is executed by the computer 350 shown in FIG. 8 in the present disclosure in response to an instruction to start data collection on a screen image displayed after selection of the step 416 shown in FIG. 10.

Referring to FIG. 12, this program 450 includes a step 452 and a step 454. The step 452 is a step of, with reference to the correspondence table storage area 394 shown in FIG. 9, establishing a connection to a wireless communication module of each of the cutting tools fitted to the turret 210 that are capable of wireless communication with the data collection device 60. The step 454 is a step of causing the flow of control to branch according to whether a message given as an input to this program is an instruction to terminate the execution of the program. The step 452 further includes an initial procedure in which the after-mentioned data collection flag is reset and a current turret number is set to a particular value (e.g. 0) that is none of 1 to 8. It is desirable that a new turret number be set to a value (e.g. 9) that is none of 1 to 8 and that is different from the current turret number. It should be noted that the data type of variable in which the current turret number and the new turret number are stored may be a numerical type (e.g. an integral type) or may be a character string type, provided a comparison in a step 458 can be properly made.

This program further includes a step 456 and the step 458. The step 456 is a step of, when the determination made in the step 454 is negative, acquiring the turret number of a cutting tool being used by the machining unit 200 (see FIG. 5). The step 458 is a step of causing the flow of control to branch according to whether the turret number acquired in the step 456 has changed from a turret number acquired at the time of execution of a previous step 456. When it is determined in the step 458 that the turret numbers have changed, the immediately preceding turret number is called "current turret number", and the changed turret number is called "new turret number". These turret numbers are stored in storage areas corresponding to their respective names in the present embodiment (i.e. in the new turret number storage area 390 and the current turret number storage area 392, which are shown in FIG. 9).

The present embodiment assumes that for the purpose of acquiring a turret number in the step 456, the machine tool 64 has a function of outputting, in response to a request for a turret number from an external device, a turret number being used in machining. For the purpose of machining, the control unit 70 needs to retain a turret number corresponding to a cutting tool being used. Accordingly, it is not particularly difficult to provide the external device with this information.

This program further includes a step 460, a step 462, and a step 464 that follows the step 462. The step 460 is a step of, when the determination made in the step 458 is positive, causing the flow of control to branch according to whether sensor data is currently being collected from a cutting tool. The step 462 is a step of, when the determination made in the step 460 is positive, transmitting, to a cutting tool corresponding to the current turret number, an instruction to suspend sensor measurements. The step 464 is a step in which data hitherto received and accumulated from the cutting tool is saved as a file in the SSD 376 (see FIG. 8). Whether data is being collected can be determined according to whether the after-mentioned data collection flag has been set. In the present embodiment, data is saved in a file during suspension of measurements. However, the present disclosure is not limited to such an embodiment. For example, received data may always be saved in a file, or data may be saved in a file every time reception of data is completed a predetermined number of times. Further, data received from an identical cutting tool may be added to an identical file, or even data received from an identical cutting tool may be divided in a predetermined unit (such as time required or amount of data) to be saved in a plurality of files. Furthermore, data received from different cutting tools may be saved in the same file in such a way that can distinguish between the cutting tools.

This program further includes a step 468, a step 470, and a step 472 that follows the step 470. The step 468 is a step of, when the determination made in the step 460 is negative, and when the determination made in the step 460 is positive and the processes in the step 462 and the step 464 have ended, causing the flow of control to branch according to whether the identification name of a machine tool system corresponding to the new turret number is stored in the correspondence table storage area 394. The step 470 is a step of, when the determination made in the step 468 is positive, transmitting, to a cutting tool corresponding to the new turret number, an instruction to start measuring sensor data. The step 472 is a step of setting a data collection flag. If the data collection flag is set, it is found that data is currently being collected from the control unit 70, and if the data collection flag is reset, it is found that data collection from the control unit 70 is unexecuted.

This program further includes a step 474, a step 478, and a step 480. The step 474 is a step of resetting the data collection flag in response to a negative determination made in the step 468. The step 478 is a step of, when the determination made in the step 468 is positive and the execution of the step 470 and the step 472 has been terminated, and when the determination made in the step 468 is negative and the execution of the step 474 has been terminated, storing the new turret number as the current turret number. The step 480 is a step of updating a display on the monitor 352 with time-series data worth the most recent predetermined period of time of data hitherto collected and returning the control to the step 454.

This program further includes a step 482, a step 484, a step 486, and a step 488. The step 482 is a step of, when the determination made in the step 458 is negative, causing the flow of control to branch according to whether data is being collected from a cutting tool currently being used in machining by the control unit 70. The step 484 is a step of, when the determination made in the step 482 is positive, receiving data from a cutting tool corresponding to the current turret number in accordance with the correspondence table storage area 394 shown in FIG. 9. The step 486 is a step of accumulating, in a memory, the data received in the step 484. The step 488 is a step of, by using the data accumulated in the step 486, updating a display on the monitor 352 with the most recent time series of data and returning the control to the step 454. When the determination made in the step 482 is negative, the control returns to the step 454.

This program further includes a step 490, a step 492, and a step 494 that follows the step 492. The step 490 is a step of, when the determination made in the step 454 is positive, causing the flow of control to branch according to whether sensor data is being currently collected from each cutting tool. The step 492 is a step of, when the determination made in the step 490 is positive, transmitting, to a cutting tool corresponding to the current turret number, an instruction to suspend sensor measurements. The step 494 is a step in which sensor data hitherto received and accumulated from each cutting tool is saved as a file for each cutting tool.

This program further includes a step 496 of, when the determination made in the step 490 is negative and when the determination made in the step 490 is positive and the step 492 and the step 494 have been completed, terminating the connection of each cutting tool to the wireless communication module 154 and terminating the execution of this program 450.

### A6. Program Configuration (Cutting Tool 100)

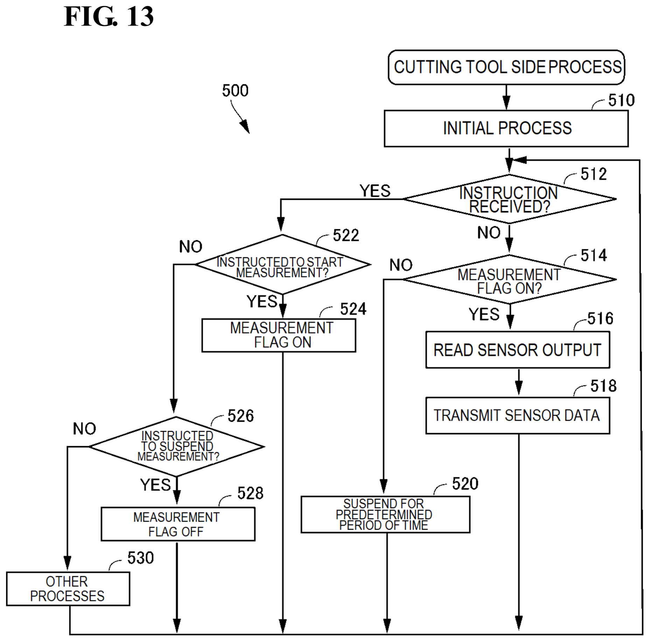

FIG. 13 shows a control structure of a program of a cutting tool side process that is executed, for example, by the CPU 152 of FIG. 4. Referring to FIG. 13, this program 500 includes a step 510, a step 512 that follows the step 510, and a step 522. The step 510 is a step of initializing each component of the data transmitter 72. The step 512 is a step of causing the flow of control to branch according to whether some sort of instruction has been received from an external device (in the present embodiment, the data collection device 60 connected via the wireless communication device 62). The step 522 is a step of, when the determination made in the step 512 is positive, causing the flow of control to branch according to whether the instruction received in the step 512 is an instruction (measurement start instruction) to start a process of measuring sensor data.

This program further includes a step 526, a step 528, and a step 530. The step 526 is a step of, when the determination made in the step 522 is negative, causing the flow of control to branch according to whether the instruction received in the step 512 is an instruction (measurement suspend instruction) to suspend the measurement of sensor data. The step 528 is a step, when the determination made in the step 526 is positive, resetting a measurement flag (described later) and returning the control to the step 512. The step 530 is a step of, when the determination made in the step 526 is negative, executing a process (that is different from the transmission of sensor data) in accordance with the instruction received in the step 512 and returning the flow of control to the step 512.

The measurement flag that is reset in the step 528 is a flag that the CPU 152 uses to determine whether a cutting tool is executing the measurement of outputs from the sensors. If the measurement flag is set, it shows that the cutting tool is measuring a sensor output and transmitting it to the data collection device 60, i.e. that the data collection device 60 is receiving sensor data. If the measurement flag is reset, it shows that the cutting tool is neither measuring a sensor output (under suspension) nor transmitting data, i.e. that the data collection device 60 is not receiving sensor data. In a case where the cutting tool is not performing the measurement of sensor data, the CPU 152 (see FIG. 4) is not performing a substantive process, so that the consumption of power by the CPU 152 is held low.

The program 500 further includes a step 514, a step 518, and a step 520. The step 514 is a step of, when the determination made in the step 512 is negative, causing the flow of control to branch according to whether the measurement flag is set. The step 518 is a step of, when the determination made in the step 514 is positive, transmitting an output from each sensor connected to the cutting tool to the data collection device 60 via the wireless communication module 154 and returning the control to the step 512. The step 520 is a step of, when the determination made in the step 514 is negative, suspending the operation of the step 512 for a predetermined period of time and then returning the control to the step 512. The transmission process that is executed in the step 518 is actually a process of passing data to the wireless communication module 154, and does not mean that the CPU 152 directly controls communication with the data collection device 60. The wireless communication module 154 forms packets in sequence from data received from the CPU 152 and transmits the packets to the wireless communication device 62.

### A7. Program Configuration (Machine Tool 64)

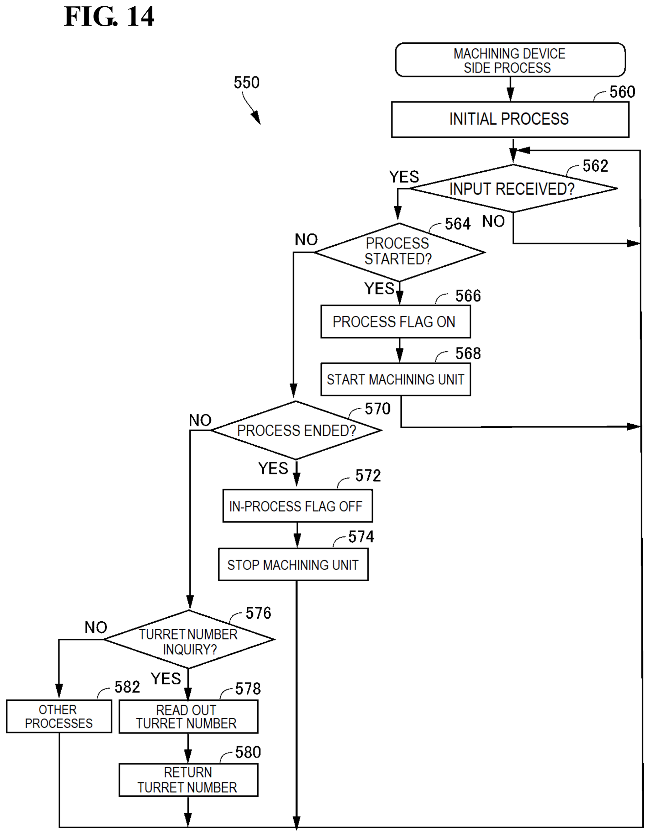

FIG. 14 shows, in a flow chart form, a control structure of a program that is executed by the processor 202 (see FIG. 7) of the machine tool 64.

Referring to FIG. 14, this program includes a step 560 and a step 562. The step 560 is a step of, immediately after the program has been launched, executing an initial process of initializing each component of the hardware. The step 562 is a step of causing the flow of control to branch according to whether there has been some sort of input from an external device. If the determination made in the step 562 is negative, the control returns to the step 562 and waits until there is an input from an external device. Examples of inputs from an external device include an instruction received from an external device (e.g. the data collection device 60) via the wireless communication device 204 shown in FIG. 5, an instruction inputted by the user using the operation panel 306, and some sort of notification outputted by the machining unit 200 as machining progresses. The following describes the program configuration with a focus on a process that the data collection device 60 performs in the step 456 and that the data collection device 60 executes upon receiving a turret number inquiry.

This program further includes a step 564, a step 566, and a step 568 that follows the step 566. The step 564 is a step of, when the determination made in the step 562 is positive, determining whether the instruction is an instruction to start a machining process and causing the flow of control to branch according to the result. The step 566 is a step of, when the determination made in the step 564 is positive, setting an in-process flag. The step 568 is a step of starting the machining unit 200 to execute a predetermined machining program and returning the control to the step 562.

This program further includes a step 570, a step 572, and a step 574. The step 570 is a step of, when the determination made in the step 564 is negative, causing the flow of control to branch according to whether the instruction is an instruction to terminate the machining. The step 572 is a step of turning off the in-process flag when the determination made in the step 570 is positive. The step 574 is a step of stopping the machining unit 200 and returning the control to the step 562.

This program further includes a step 576, a step 578, a step 580, and a step 582. The step 576 is a step of, when the determination made in the step 564 is negative, causing the flow of control to branch according to whether the input received in the step 562 is a turret number inquiry from the data collection device 60. The step 578 is a step of, when the determination made in the step 576 is positive, reading out, from the turret number storage unit 212 shown in FIG. 5 (which is substantially the RAM 324 shown in FIG. 7), a turret number serving as the number of a fitting fitted with the cutting tool being used. The step 580 is a step of wirelessly returning, to the data collection device 60, the turret number read out in the step 578 and returning the control to the step 562. The step 582 is a step of, when the determination made in the step 576 is negative, executing some sort of process in accordance with the instruction inputted in the step 562 and returning the control to the step 562.

### B. Operation

The machine tool system 50 (see FIG. 2) structured as described above operates in the following manner. For example, first, the user launched the program 400 shown in FIG. 10 in the data collection device 60. Then, the user operates the first button. Operating the first button causes the screen image 430 shown in FIG. 11 to be displayed on the monitor 352. If any of the fittings of the turret 210 is fitted with a cutting tool having the function as the cutting tool 100, the user uses the screen image 430 to enter the identification name of the cutting tool into a corresponding field of the field column 440 as an identifier corresponding to the turret number of the fitting. By the user pressing the set button 444 after having entered into the field column 440 the identification names of all the cutting tools to be used, the identification name of a cutting tool from which data is to be collected is stored in the correspondence table storage area 394 (see FIG. 9) in association with the turret number of a fitting to which the cutting tool is fitted. This results in enabling the control unit 70 to start a machining process.

Next, the user fits, to one of the fittings of the turret 210 of the machine tool 64 that corresponds to a turret number set on the screen image 430 shown in FIG. 11, a cutting tool corresponding to an identification name set on the screen image 430. Based on a process that is executed on a work, the user also fits, to predetermined fittings, other cutting tools needed for machining. Once all necessary cutting tools are fitted to the turret 210, the start of a machining process and a data collection process can be started. It is assumed here that as shown in FIG. 6, the fitting 230 (turret number = 0), the fitting 244, and the fitting 242 are fitted with the cutting tool 100, the cutting tool 102, and the cutting tool 104, respectively. All of these cutting tools include a function of transmitting sensor data to the data collection device 60. Further, it is assumed that the other fittings are not fitted with cutting tools. Further, at the time of startup of the machine tool 64, the turret 210 is in such a position that the fitting 230 (turret number = 1) is used.

Accordingly, at the time of launching of the program 400, the fittings assigned the turret number 1, the turret number 7, and the turret number 8 and the cutting tool 100, the cutting tool 102, and the cutting tool 104 are stored in the correspondence table storage area 394 of FIG. 9 in association with one another, respectively.

In each of the cutting tools 100, 102, and 104, the program shown in FIG. 13 is launched, and after the step 510 has been executed, the control follows the path "step 512 → step 514 → step 520" and the cutting tool is in a state of waiting for instructions until it is determined in the step 512 that a measurement start instruction is received. That is, all of these cutting tools are substantially in a waiting state until they receive measurement start instructions from the data collection device 60.

In the data collection device 60, first, the processing of the step 416 of the program 400 is started, and data collection is started. Furthermore, in the machine tool 64, a machining process is started. In this case, the processing "step 452 → step 454 → step 456" in FIG. 12 is executed. In the step 456, the data collection device 60 requests the machine tool 64 for a notification of a turret number. In response to this, the processor 202 of the machine tool 64 executes the step 578 and the step 580 after the path "step 562, step 564, step 570, and step 576" in the program whose control structure is shown in FIG. 14. As a result of this, a turret number, stored in the turret number storage unit 212 shown in FIG. 5, that indicates a fitting fitted with a cutting tool being used in machining is transmitted from the machine tool 64 to the data collection device 60.

The turret number (new turret number) that is acquired in the step 456 is 1. Since the current turret number is 0, the determination made in the step 458 is inevitably negative, with the result that the control proceeds to the step 460. Since a data collection process is yet to be started, a negative determination is made in the step 460, with the result that the control proceeds to the step 468. In the step 468, it is determined whether the turret number (= 1) acquired in the step 458 is present in the correspondence table storage area 394 shown in FIG. 9. A positive determination is made here. Then, the control proceeds to the step 470. In the step 470, a measurement start instruction is transmitted to the cutting tool 100, which corresponds to the new turret number (= 1).

As a result of this, in the program shown in FIG. 13, which is being executed in the cutting tool 100, the control proceeds from the step 512 through the step 522 to the step 524. In the step 524, a measurement flag is turned on, with the result that the control returns to the step 512. In a cycle that follows, the control proceeds from the step 512 through the step 514 and the step 516 to the step 518. As a result of that, the CPU 152 of the cutting tool 100 reads (measures) an output from each sensor in the step 516 and transmits the sensor data to the data collection device 60 in the step 518.

Meanwhile, referring to FIG. 12, the data collection device 60 transmits a measurement start instruction to the cutting tool 100 in the step 470 and then sets a data collection flag in the step 472. After that, the new turret number (= 1) is stored as the current turret number. As a result of this, the current turret number assumes a value of 1. Furthermore, in the step 480, a display on the monitor 352 is updated with the result of data, if any, received from the cutting tool 100. In the first cycle, data is yet to be received from the cutting tool 100. Accordingly, the absence of any data on the monitor 352 is displayed on the monitor 352.

After this, the control returns to the step 454. Without a termination instruction, a negative determination is made in the step 454, with the result that the control proceeds to the step 456. Normally, there is no change of turret numbers in the second cycle. Accordingly, a negative determination is made in the step 458. The control proceeds to the step 482. A positive determination is made in the step 482. The control proceeds with the path "step 484, step 486, and step 488", and the data collection device 60 receives the sensor data from the cutting tool 100, accumulates the sensor data, and updates the display. The control returns to the step 660.

Thus, while the machine tool 64 is executing a machining process with the cutting tool 100, a process of transmitting sensor data from the cutting tool 100 to the data collection device 60 is repeatedly executed. After a certain period of time has elapsed, the control of the machining unit 200 by the processor 202 causes the turret 210 to be rotated so that the fitting 244, which corresponds to the turret number 8, is used. As a result of this, the turret number storage unit 212 changes from retaining a value of 1 to retaining a value of 8. In this case, the data collection device 60 and the cutting tool 100 operate in the following manner.

Referring to FIG. 12, in the step 456, a new turret number, i.e. the new turret number (= 8), is acquired. Meanwhile, the turret number of the fitting fitted with the cutting tool being used, i.e. the current turret number, is 1. As a result of this, a positive determination is made in the step 458, with the result that the control proceeds to the step 460. The data collection flag is set in the step 472. Accordingly, a positive determination is made in the step 460, and in the step 462, an instruction to suspend the transmission of sensor data is transmitted to the cutting tool 100, which is fitted to the turret number 1. In the step 464 that follows, a process in which data hitherto received from the cutting tool 100 is saved together in a file is performed.

Next, in the step 468, it is determined whether the turret number (= 8) is stored in the correspondence table storage area 394. As shown in FIG. 6, the turret number 8 is stored in the correspondence table storage area 394 in association with the cutting tool 102. Accordingly, a positive determination is made in the step 468, and in the step 470, an instruction to start measuring a sensor output is transmitted to the cutting tool 102. In the step 472, the data collection flag is set. Furthermore, in the step 478, the new turret number (= 8) is stored as the current turret number. In the step 480, data display is updated based on data collected from the cutting tool 100, and the control returns to the step 454. In this way, the reception of sensor data from the cutting tool 100 ends, and the transmission of sensor data from the cutting tool 102 is started. From this time on, such a process is repeatedly executed.

In the example shown in FIG. 6, cutting tools other than the cutting tool 100, the cutting tool 102, and the cutting tool 104 are not fitted to the turret 210. However, for example, in a case where a cutting tool not having the same function as the cutting tool 100, i.e. a cutting tool not having a function of transmitting sensor data, is fitted to the turret 210, a case different from the above takes place. The following describes how the machine tool system 50 operates in that case.

The following description assumes that the sixth fitting 240 is fitted with a cutting tool not having a function of transmitting sensor data. In this case, the turret number 6, which corresponds to this fitting, is not stored in the correspondence table storage area 394 shown in FIG. 9.

Suppose that the cutting tool 104 has just been used in a machining process, that the machining has ended, and that the turret 210 has rotated so that the cutting tool fitted to the fitting 240 has become ready for use. In this case, the value of the new turret number that is acquired in the step 456 of FIG. 12 is 6. On the other hand, the current turret number stored in the current turret number storage area 392 is 7. Accordingly, a positive determination is made in the step 458. In the step 462, an instruction to suspend the transmission of sensor data is transmitted to the cutting tool 104. In the step 464, sensor data received from the cutting tool 104 is saved in a file.

A negative determination is made in the step 468 that follows. Accordingly, the control proceeds to the step 474, and in the step 474, the data collection flag is cleared. In the step 478, the new turret number (= 6) is stored as the current turret number. In the step 480, data display is updated based on data collected by the process up to the step 464, and the control returns to the step 454.

While the cutting tool fitted to the fitting 240 is being used, the turret number that is acquired in the step 456 remains 6. Accordingly, a negative determination is made in the step 458. The data collection flag is cleared in the step 474. Accordingly, a negative determination is made in the step 482, with the result that the control returns to the step 474. That is, unless the cutting tool is replaced with a new one, collection of sensor data from the cutting tool is not executed.

Assume that the user has given an instruction to collect a process of collecting data. In this case, a positive determination is made in the step 454. In the step 490, it is determined whether the data collection process is being executed. This determination is made according to whether the data collection flag is set or reset. In a case where the data collection flag is set, an instruction to suspend the transmission of sensor data is given to the cutting tool corresponding to the current turret number in the step 492. In the step 494. sensor data hitherto received is saved as a file. In the step 496, all cutting tools having a function of transmitting sensor data are instructed to terminate the connection, and the execution of the program 450 is terminated. As a result of this, each cutting tool stops functioning.

In the step 490, in a case where the data collection flag is reset in the step 490, each cutting tool is immediately instructed to terminate the connection, with the result that the execution of the program 450 is terminated. Also in this case, each cutting tool stops functioning.

As noted above, according to the present embodiment, in a case where a cutting tool having a function of transmitting sensor data is being used in machining by the machine tool 64, the cutting tool executes the transmission of sensor data, and the data collection device 60 executes the reception of sensor data from each cutting tool. In a case where such a cutting tool is not used in machining, the cutting tool does not execute the transmission of sensor data, and the data collection device 60 does not execute the reception of sensor data. This results in allowing the cutting tool to use less electric power. This also prolongs time for replacement of a battery. This results in making it possible to solve problems that arise from a high sampling rate. Further, the connection between each cutting tool and the data collection device 60 is maintained over a period from the time when the data collection device 60 is instructed to start a data collection process to the time when the data collection device 60 is instructed to end the data collection process. When the collection of data from a particular cutting tool is started, the cutting tool and the data collection device 60 do not need to newly establish a connection to each other. This results in making it possible to, even when the cutting tool is replaced with a new cutting tool, reduce the possibility that the data collection device 60 may fail to receive sensor data first transmitted from the new cutting tool.

### 3. Second Embodiment

### A. Configuration

In the first embodiment, in executing the program 450 of FIG. 12, the data collection device 60 repeatedly executes the step 456 and thereby detects a change from using one cutting tool to using another in machining. However, the present disclosure is not limited to such an embodiment. In the second embodiment, when a machine tool starts machining with a new cutting tool by rotating a turret, the machine tool transmits to a data collection device a turret number corresponding to a fitting fitted with the cutting tool. In the present embodiment, upon receiving a new turret number from the machine tool, the data collection device 60 changes from communicating with one cutting tool to communicating with another.

The data collection device, the machine tool, the cutting tools, or other devices that are used in the second embodiment are the same in hardware configuration to those of the first embodiment. Accordingly, a detailed description of those devices is not repeated.

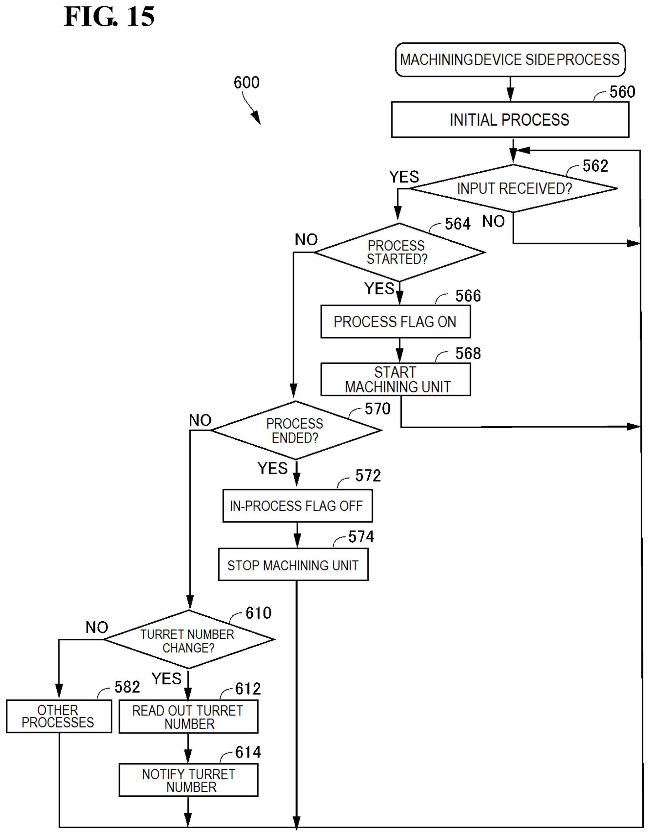

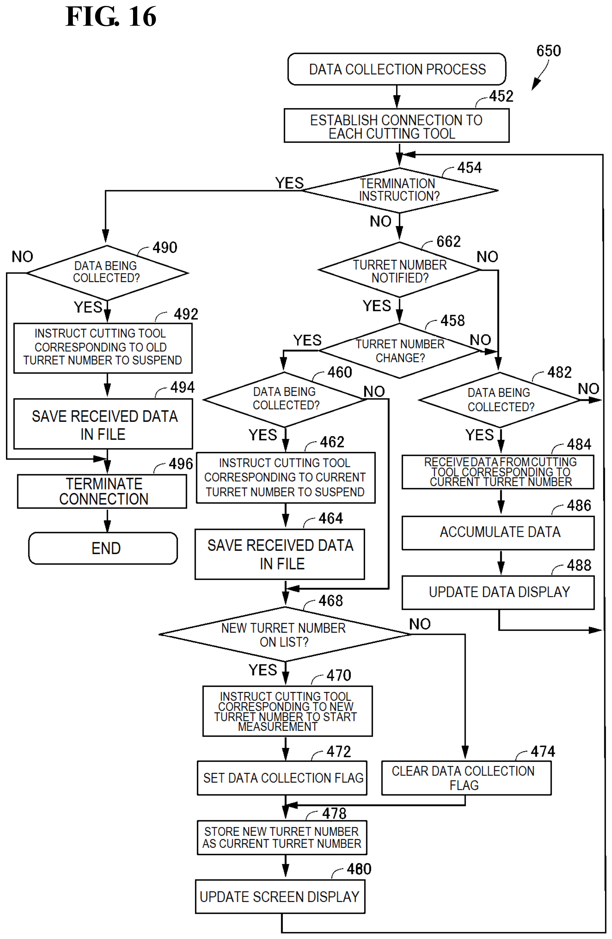

In the second embodiment, the processor 202 (FIG. 7) of the machine tool 64 executes a program 600 whose control structure is shown in FIG. 15, and the computer 350 (FIG. 8) of the data collection device 60 executes a program 650 whose control structure is shown in FIG. 16.

Referring to FIG. 15, the program 600 differs from that of the first embodiment shown in FIG. 14 in that the program 600 includes a step 610, a step 612, and a step 614 instead of the step 576, the step 578, and the step 580 in FIG. 14. The step 610 is a step of causing the flow of control to branch according to whether the input received in the step 562 is a notification indicating that a different turret number has been received from the machining unit 200 (see FIG. 5). The step 612 is a step of, when the determination made in the step 610 is positive, reading out the different turret number from the turret number storage unit 212 (see FIG. 5). The step 614 is a step of notifying the data collection device 60 of the turret number read out in the step 612 and returning the control to the step 562.

That is, in the present embodiment, the machine tool 64 does not notify the data collection device 60 of a turret number in response to a request from the data collection device 60 but, in response to the machining unit 200 (FIG. 5) changing from using one cutting tool to another, notifies the data collection device 60 of a turret number corresponding to a fitting fitted with the new cutting tool. Such a configuration can bring about effects that are similar to those of the first embodiment.

In the second embodiment, the control structure of the program 650, which is executed by the computer 350 (FIG. 8) of the data collection device 60 shown in FIG. 2, is shown in FIG. 16. The program 650 differs from the program 450, whose control structure is shown in FIG. 12, in that the program 650 includes, instead of the step 456 of FIG. 12, a step 662 of, when the determination made in the step 454 is negative, causing the flow of control to branch according to whether the instruction received in the step 660 is a notification of a turret number from the machine tool 64. If the determination made in the step 662 is positive, the control proceeds to the step 458. If the determination made in the step 662 is negative, the control proceeds to the step 482.

In other respects, the program 650 is the same as the program 450 shown in FIG. 12.

### B. Operation

In the second embodiment, rotating the turret 210 during operation causes the machining unit 200 (FIG. 5) of the machine tool 64 to notify the processor 202 (FIG. 5) of a new turret number. Upon receiving this notification, the processor 202 reads out the turret number notified in the step 612 from the turret number storage unit 212 (see FIG. 5) after the path "step 562, step 564, step 570, and step 610" in the program whose control structure is shown in FIG. 15. The processor 202 wirelessly notifies the data collection device 60 of this turret number.

Meanwhile, the data collection device 60 of the machine tool system 50 according to the second embodiment operates substantially in the same manner as it does in the first embodiment. A point of difference is that when a notification of a turret number is inputted from the machine tool 64 in the step 454, the step 458 is executed after the path "step 454 and step 662" shown in FIG. 16. In other respects, the machine tool system 50 according to the second embodiment is the same as in the case of the first embodiment.

As noted above, according to the second embodiment, in a case where a cutting tool having a function of transmitting sensor data is being used in machining by the machine tool 64, the cutting tool executes the transmission of sensor data, and the data collection device 60 executes the reception of sensor data from each cutting tool. In a case where such a cutting tool is not used in machining, the cutting tool does not execute the transmission of sensor data, and the data collection device 60 does not execute the reception of sensor data. This allows the cutting tool to use less electric power. This also prolongs time for replacement of a battery. This results in making it possible to solve problems that arise from a high sampling rate. Further, the connection between each cutting tool and the data collection device 60 is maintained over a period from the time when the data collection device 60 is instructed to start a data collection process to the time when the data collection device 60 is instructed to end the data collection process. Accordingly, when the collection of data from a particular cutting tool is started, the cutting tool and the data collection device 60 do not need to newly establish a connection to each other. Even when the cutting tool is replaced with a new cutting tool, the possibility that the data collection device 60 may fail to receive sensor data first transmitted from the new cutting tool can be reduced. Furthermore, in the second embodiment, the data collection device 60 does not need to repeatedly inquire the machine tool 64 for a turret number. This results in making it possible to simplify the processes in the data collection device 60 and the machine tool 64. The connection between each cutting tool and the data collection device 60 is basically always maintained as noted above. However, the connection between them may be temporarily impossible due to fluctuations in communication distance, influences of shields, or other factors. In such a case, it is only necessary to temporarily store data in the cutting tool and repeatedly retry a reconnection at the same time and, when a reconnection is successful, transmits the saved data together to the data collection device 60.

### 4. Third Embodiment

### A. Configuration

In the second embodiment, unlike in the first embodiment, when there is a change in a turret number corresponding to a cutting tool being used by the machine tool 64, a turret number is notified from the machine tool 64 to the data collection device 60. However, the present disclosure is not limited to such an embodiment. In the third embodiment, whether the turret 210 has been rotated is determined using an output from the acceleration sensor of the cutting tool 100, and when it is determined that the turret 210 has been rotated, the data collection device 60 is notified of information to that effect. Upon receiving this notification from the cutting tool 100, the data collection device 60 inquires the machine tool 64 for a turret number.

In the present embodiment, the control structure of a program that is executed by the machine tool 64 is similar to that of the third embodiment shown in FIG. 15.

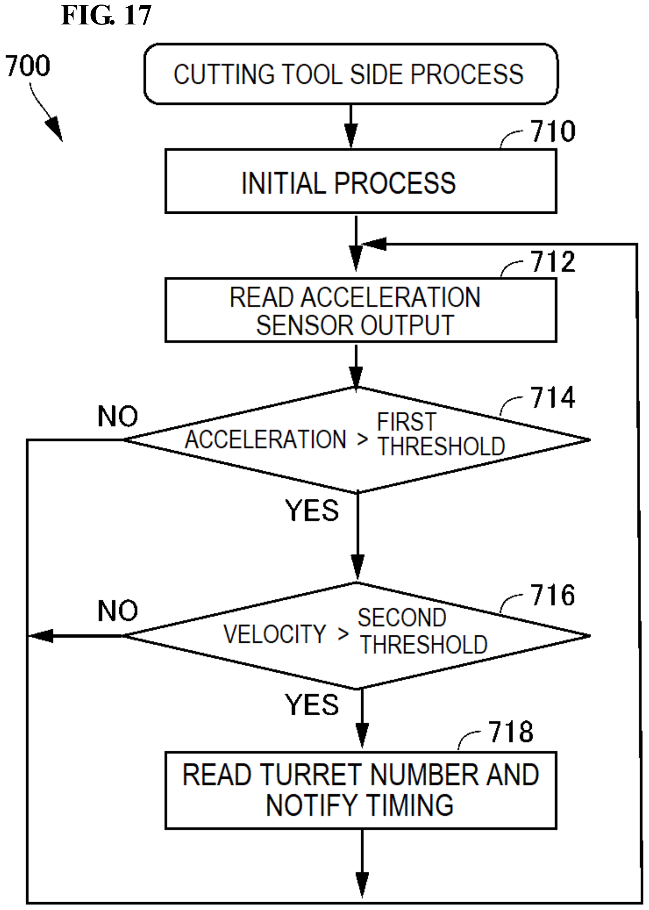

Meanwhile, for example, the cutting tool 100 executes a program 700 whose control structure is shown in FIG. 17. The program 700 includes a step 710, a step 712, a step 714, a step 716, and a step 718. The step 710 is a step of performing an initial process of initializing each component of the hardware at the time of launching of the program. The step 712 is a step of reading an output from the acceleration sensor 136 shown in FIG. 3. The step 714 is a step of causing the flow of control to branch according to whether a value of acceleration calculated based on the output from the acceleration sensor 136 obtained in the step 712 is greater than a first threshold. The step 716 is a step of, when the determination made in the step 714 is positive, causing the flow of control to branch according to whether a value of velocity calculated based on the output from the acceleration sensor 136 is greater than a second threshold. The step 718 is a step of, when the determination made in the step 716 is positive, transmitting to the data collection device 60 a notification indicating that it is time to read a turret number and returning the control to the step 712.

When the determination made in the step 714 is negative and when the determination made in the step 716 is negative, the control returns to the step 712. That is, in this case, unlike in the step 718, a notification indicating the timing of reading of a turret number is not transmitted.

In the present embodiment, the data collection device 60 executes a program 750 whose control structure is shown in FIG. 18. The program 750 differs from the program 450, whose control structure is shown in FIG. 12, in that the program 750 includes a step 760 of, when the determination made in the step 454 shown in FIG. 12 is negative, causing the flow of control to branch according to whether the input received in the step 454 is a notification received from the cutting tool 100 or other tools and indicating that it is time to read a turret number. If the determination made in the step 760 is positive, the control proceeds to the step 456. If the determination made in the step 760 is negative, the control proceeds to the step 482.

In other respects, the control structure of the program 750 is the same as that of the program 650 shown in FIG. 16.

### B. Operation

The third embodiment is characterized in that the cutting tool 100 or other tools detects, from the output from the acceleration sensor 136, whether the turret 210 (see FIG. 5 and FIG. 6) has rotated and, only when it is determined that the turret 210 has rotated, does not transmit to the data collection device 60 a notification indicating the timing of reading of a turret number. As a result of this, unless the data collection device 60 receives from the cutting tool 100 or other tools a notification indicating the timing of reading of a turret number, the data collection device 60 does not send a turret number transmission request to the machine tool 64 (FIG. 2). Especially at the start of rotation and the end of rotation of the turret 210, the absolute value of acceleration detected by the cutting tools 100 or other tools becomes greater than a predetermined threshold. Further, in some period of time at the start of rotation and the end of rotation, the absolute value of velocity of the cutting tool 100 or other tools becomes greater than a predetermined threshold. Accordingly, it is only when the turret 210 has actually started rotating and finished rotating that the data collection device 60 transmits a turret number transmission request to the machine tool 64. This makes it unnecessary for the data collection device 60 to repeatedly send a turret number transmission request to the machine tool 64 in short cycles as in the case of the first embodiment. As a result of that, the third embodiment brings about an effect of reducing portions of the processes in the data collection device 60 and the machine tool 64. It is only when the turret 210 has started rotating and finished rotating that the cutting tool 100 transmits a turret number readout notification. This makes it possible to avoid increased consumption of electric power by the cutting tool 100 or other tools.

Accordingly, as with the first embodiment and the second embodiment, the third embodiment makes it possible to solve problems that arise from a high sampling rate. Further, the connection between each cutting tool and the data collection device 60 is maintained over a period from the time when the data collection device 60 is instructed to start a data collection process to the time when the data collection device 60 is instructed to end the data collection process. As a result of that, when the collection of data from a particular cutting tool is started, the cutting tool and the data collection device 60 do not need to newly establish a connection to each other. Accordingly, even when the cutting tool is replaced with a new cutting tool, the possibility that the data collection device 60 may fail to receive sensor data first transmitted from the new cutting tool can be reduced. Furthermore, in the third embodiment, as in the case of the second embodiment, the data collection device 60 does not need to repeatedly inquire the machine tool 64 for a turret number. This results in making it possible to simplify the processes in the data collection device 60 and the machine tool 64.

### 5. Modification of Control Unit 70

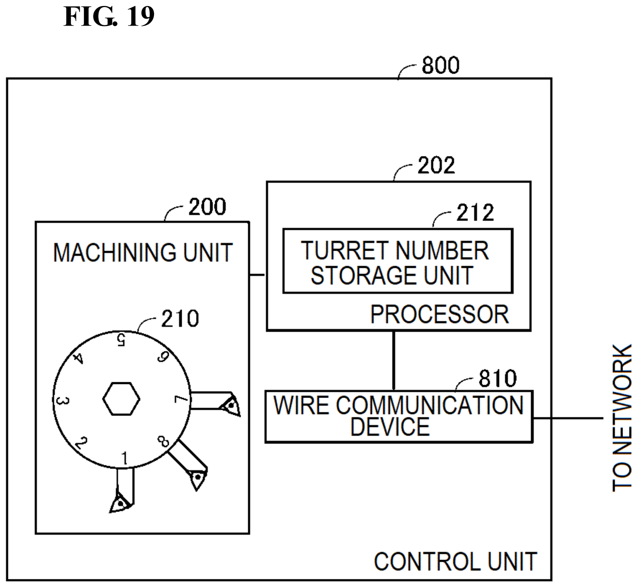

The machine tool 64, which is used in the foregoing embodiments, uses the control unit 70, which has the wireless communication device 204, shown in FIG. 5. However, the present disclosure is not limited to such an embodiment. The machine tool 64 may use a control unit 800 shown in FIG. 19 instead of using the control unit 70.

Referring to FIG. 19, the control unit 800 differs from the control unit 70 shown in FIG. 5 in that the control unit 800 includes, instead of the wireless communication device 204 shown in FIG. 5, a wire communication device 810 that is connected to a network by a communication line such as a cable. In other respects, the control unit 800 is identical to the control unit 70. Using wire communication instead of wireless communication makes it possible for the machine tool 64 to perform stable communication with the data collection device 60 even in an environment such as a machining site where there is much electrical noise. Although, in FIG. 19, the wire communication device 810 is connected to the network by the communication line and performs communication with an external device via the network, the present disclosure is not limited to such an embodiment. For example, the wire communication device 810 may be directly connected to the data collection device 60 by a communication line.

### 6. Implementation by Processing Circuit

Each process (each function) of the aforementioned embodiments is implemented by processing circuitry including one or more processors. The processing circuitry may be constituted by not only the one or more processors but also an integrated circuit or other circuits formed by a combination of one or more memories, various types of analog circuit, and various types of digital circuits. The one or more memories store a program (instructions) that causes the one or more processors to execute each process mentioned above. The one or more processors may execute each process mentioned above in accordance with the program read out from the one or more memories or may execute each process mentioned above in accordance with a logic circuit designed in advance to execute each process mentioned above. The processors may be a variety of computer-controllable processors such as a CPU, a GPU (graphics processing unit), a DSP (digital signal processor), an FPGA (field-programmable gate array), and an ASIC (application specific integrated circuit). The processors physically separated may cooperate with each other to execute each process mentioned above. For example, the processors mounted in a plurality of computers physically separated may cooperate with each other via a network such as a LAN (local area network), a WAN (wide area network), or the Internet to execute each process mentioned above. The program may be installed in the memories via the network from an external server device or other devices. Alternatively, the program may be distributed in a state of being stored in a storage medium such as a CD-ROM (compact disc read-only memory), a DVD-ROM (digital versatile disc read-only memory), or a semiconductor memory and installed in the memories from the storage medium.

The embodiments disclosed herein should be construed as not limitative but illustrative in all respects. The scope of the present disclosure is not indicated by a detailed description of the disclosure but indicated by each of the claims, and it is intended that meanings of equivalents to the wording of the claims and all changes falling within the scope are encompassed.

### REFERENCE SIGNS LIST

10, 50 machine tool system
12 data collection unit
14, 64 machine tool
16, 100, 102, 104 cutting tool
20 main control unit
22 information acquisition unit
24 information storage unit
26 start control unit
28 data receiving unit
30 data accumulation unit
32 data display unit
34 wireless receiver
36, 62, 204 wireless communication device
40, 212 turret number storage unit
42 turret control unit
44, 154 wireless communication module
46 output unit
48, 130 sensor
52 data collection system
60 data collection device
70, 800 control unit
72, 74, 76 data transmitter
110 holder section
112 head section
114 fixing member
116 cutting insert
118 cutting blade
120 front face
122 end face
124 top face
126 back face
128 bottom face
132 strain sensor
134 thermal sensor
136 acceleration sensor
*150* A/D conversion unit
152, 320, 370 CPU
156 nonvolatile memory
158 power source
200 machining unit
202 processor
210 turret
220 central shaft
230, 232, 234, 236, 238, 240, 242, 244 fitting
300, 350 computer
302, 358 USB memory
304, 360 network
306 operation panel
322, 372 ROM
324, 374 RAM
326, 376 SSD
328, 378 bus
330, 382 input-output I/F
332, 384 USB port
334, 386 network I/F
352 monitor
354 touch pad
356 keyboard
390 new turret number storage area
392 current turret number storage area
394 correspondence table storage area
430 screen image
440 field column
442 cancel button
444 set button
810 wire communication device

## Claims

1. A data collection device comprising:
an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a tool being used by the machine tool; and
an information storage unit storing the information related to the fitting fitted with a first cutting tool, the first cutting tool including a sensor configured to detect a state of the first cutting tool and an output unit configured to output data outputted by the sensor,
the data collection device further comprising a data receiving unit configured to execute or stop reception of the data from the first cutting tool according to whether the information obtained by the information acquisition unit matches the information related to the fitting fitted with the first cutting tool.

2. The data collection device according to claim 1, wherein the data receiving unit is configured to execute the reception of the data from the first cutting tool via a wireless communication device.

3. The data collection device according to claim 2, wherein the data receiving unit is configured to maintain a connection to the cutting tool by the wireless communication even during stoppage of the reception of the data from the first cutting tool.

4. The data collection device according to claim 3, further comprising:
a stop control unit configured to, in response to a change of the information obtained by the information acquisition unit from a state of matching the information related to the fitting fitted with the first cutting tool to a state of not matching the information, transmit to the first cutting tool a stop instruction to cause the sensor to stop detecting the state; and
a start control unit configured to, in response to a change of the information obtained by the information acquisition unit from the state of not matching the information related to the fitting fitted with the first cutting tool to the state of matching the information, transmit to the first cutting tool a start instruction to cause the sensor to start detecting the state.

5. The data collection device according to any one of claims 1 to 4, wherein the information acquisition unit is configured to repeatedly acquire the information at time intervals shorter than a period of time required from a start of a replacement of the cutting tool to an end of the replacement in the machine tool.

6. The data collection device according to any one of claims 1 to 4, wherein
the machine tool has a function of, when the machine tool changes from using one cutting tool to using another, outputting the information identifying the cutting tool, and
the information acquisition unit is configured to acquire the information from the machine tool when the machine tool changes from using the one cutting tool to using the other.

7. The data collection device according to any one of claims 1 to 4, wherein
the sensor of the first cutting tool includes at least an acceleration sensor,
the first cutting tool has a function of detecting switching to another cutting tool by the machine tool based on an output from the acceleration sensor and outputting a switching detection signal to the data collection device via the output unit, and
in response to reception of the switching detection signal from the first cutting tool, the information acquisition unit is configured to acquire, from the machine tool, information identifying the fitting fitted with the cutting tool to be used by the machine tool.

8. A data collection method of causing a computer to perform operations comprising:
acquiring, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool; and
storing, in a storage device, the information related to the fitting fitted with a first cutting tool, the first cutting tool including a sensor configured to detect a state of the first cutting tool and an output unit configured to output data outputted by the sensor,
the method further comprising executing or stopping reception of the data from the first cutting tool according to whether the information obtained in the acquiring matches the information related to the fitting fitted with the first cutting tool.

9. A data collection program being a computer program for causing a computer to function as:
an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool; and
an information storage unit storing the information related to the fitting fitted with a first cutting tool, the first cutting tool including a sensor configured to detect a state of the first cutting tool and an output unit configured to output data outputted by the sensor,
the computer program further causing the computer to function as a data receiving unit configured to execute or stop reception of the data from the first cutting tool according to whether the information obtained by the information acquisition unit matches the information related to the fitting fitted with the first cutting tool.

10. A cutting tool comprising:
a wireless communication unit;
a holder holding a cutting insert;
a sensor provided in the holder;
a data transmission unit provided in the holder and configured to measure an output from the sensor and wirelessly transmit the output from the sensor to an external device via the wireless communication unit; and
a sensor control unit configured to, in response to reception of a first instruction or a second instruction different from the first instruction from the external device via the wireless communication unit, cause the data transmission unit to start or stop measuring the output from the sensor.

11. A data collection system comprising:
a cutting tool including a sensor and having a function of transmitting data detected by the sensor to an external device; and
a data collection device configured to collect the data from the cutting tool,
the data collection device including
an information acquisition unit configured to acquire, from a machine tool having a plurality of fittings to which a plurality of cutting tools are able to be fitted and using the plurality of cutting tools in machining of a work with switching among the plurality of cutting tools, information identifying a fitting fitted with a cutting tool being used by the machine tool,
an information storage unit storing the information related to the fitting fitted with the cutting tool,
a data receiving unit configured to execute or stop reception of the data from the cutting tool according to whether the information obtained by the information acquisition unit matches the information related to the fitting fitted with the cutting tool,
a stop control unit configured to, in response to a change of the information obtained by the information acquisition unit from a state of matching the information related to the fitting fitted with the cutting tool to a state of not matching the information, transmit to the cutting tool a first instruction to cause the sensor to stop detecting the state, and
a start control unit configured to, in response to a change of the information obtained by the information acquisition unit from the state of not matching the information related to the fitting fitted with the cutting tool to the state of matching the information, transmit to the first cutting tool a second instruction to cause the sensor to start detecting the state,
the cutting tool including
a wireless communication unit,
a holder having the sensor attached thereto and holding a cutting insert,
a data transmission unit provided in the holder and configured to measure an output from the sensor and wirelessly transmit the output from the sensor to the data collection device via the wireless communication unit, and
a sensor control unit configured to, in response to reception of the first instruction or the second instruction from the data collection device via the wireless communication unit, cause the data transmission unit to start or stop measuring the output from the sensor.
